# EUROPEAN PATENT APPLICATION

(11) **EP 1 635 249 A1**
(43) Date of publication of application: **15.03.2006**
(21) Application number: 04745992.0
(22) Date of filing: 16.06.2004
(51) Int. Cl.: G06F 3/03

(54) **TERMINAL DEVICE, DISPLAY SYSTEM, DISPLAY METHOD, PROGRAM, AND RECORDING MEDIUM**

(30) Priority: 16.06.2003 JP 2003171314
(71) Applicant: Toho Business Management Center, Co., LTD., Toshima-ku, Tokyo 1706057 (JP)
(72) Inventor: YOSHINO,Eiko, Toho Business Manegement CenterCoLtd, Toshima-ku, Tokyo 1706057 (JP)
(74) Representative: Jenkins, Peter David
(86) International application number: PCT/JP2004/008451
(87) International publication number: WO 2004/111824

(57) **Abstract**

To provide a terminal device whereby a conference can be conducted smoothly by users inputting handwritten information.

A terminal device comprises: display means for displaying a background image in accordance with background image data; reception means for receiving handwritten data indicating the content of notes handwritten on a medium the background image is drawn, the medium is placed on a handwritten input device; and reproduction means for displaying the content of handwritten notes superimposed on the displayed background image so that, in accordance with the handwritten data, the position of the content of the handwritten notes on the background image on the medium and the position of the background image displayed by the display means correspond.

## Description

### CROSS-REFERENCES

The present invention relates to a terminal device, display system, display method, program and recording medium. In particular, the present invention relates to a terminal device, display system, display method, program and recording medium whereby handwritten input information can be accurately reproduced on display means.

### BACKGROUND

A conventional conference system is disclosed in Laid-open Japanese Patent Application No. 2002-44284. The conference system disclosed in the above Laid-open Japanese Patent Application No. 2002-44284 is a system comprising a plurality of mobile white boards, wherein, when information is input to a mobile white board, this information is displayed on all of the mobile white boards, thereby enabling a conference to be conducted. The mobile white boards are provided with display units, and information is input by writing manually with an input pen on this display unit.

### SUMMARY

However, when manually written input is effected to a display unit such as a liquid crystal screen, offset due to parallax etc is generated between the pen tip and the handwriting that is displayed on the display unit, giving an unnatural feel when the user effects input. Furthermore, the surface of the liquid crystal screen or the like was of material that made it difficult to move the pen smoothly over the surface, making it very difficult for example to form the characters properly when effecting input.

An object of the present invention is therefore to provide a terminal device, display system, display method, program and recording medium whereby the above problems can be solved. This object is achieved by the combination of characteristic features set out in the independent claims. The dependent claims set out further advantageous specific examples.

### Means for solving the problem

In order to solve the above problem, according to a first aspect of the invention, there is provided a terminal device comprising: display means for displaying a background image in accordance with background image data; reception means for receiving handwritten data indicating the content of notes handwritten on a medium on which the background image is drawn, the medium is placed on a handwritten input device; and reproduction means for displaying the content of the hand written notes superimposed on the displayed background image so that, in accordance with the handwritten data, the position of the content of the handwritten notes on the background image on the medium and the position of the background image displayed by the display means correspond.

Preferably this terminal device further comprises reception means for receiving background image data through a communication circuit and preferably further comprises printing control means for printing the background image on a medium in a printing device in accordance with the background image data.

Preferably the printing control means causes the printing device to print the background image expanded or contracted in at least one direction, in accordance with the region where the medium is placed in the handwriting input device. In this case, preferably this terminal device further comprises storage means that stores co-ordinate data whereby a correspondence is established between co-ordinates in the printing region in which the background image is printed on a medium and co-ordinates in a display region in which the background image is displayed by the display means, and the reproduction means displays the content of the handwritten notes superimposed on the displayed background image in accordance with the co-ordinate data.

The printing control means may expand or contract the background image in at least one direction in accordance with a region, on the medium, that is printable by the printing device. Also, the printing control means may further cause the printing device to print a reference mark indicating the direction for placing the medium on the handwriting input device.

According to a second aspect of the invention, there is provided a display system characterized in that it comprises a first terminal device and a second terminal device constituting the terminal devices; and a server connected through a communication circuit with the first terminal device and the second term device, wherein the first terminal device sends background image data to the server through the communication circuit, the server sends background image data received from the first terminal device to the second terminal device through the communication circuit and the second terminal device displays a background image in accordance with the background image data received from the server.

Preferably, the second terminal device displays the background image when there is a request from the first terminal device to display the background image. Also, preferably the first terminal device sends first handwritten data constituting handwritten data received by the first terminal device to the server, the server sends the first handwritten data at least to the second terminal device and the second terminal device displays the content of the handwritten notes indicated by the first handwritten data.

Preferably the second terminal device sends second handwritten data constituting handwritten data received by the second terminal device to the server, the server further sends the second handwritten data at least to the first terminal device, and the first terminal device further displays the content of the handwritten notes indicated by the second handwritten data.

According to a third aspect of the invention, there is provided a display system characterized in that it comprises a first terminal device and a second terminal device constituting the terminal devices, the first terminal device generates a synthesized image including a background image and the content of notes displayed superimposed on this background image to be sent to the second terminal device, and the second terminal device displays the synthesized image as a background image in the second terminal device.

According to a fourth aspect of the invention, there is provided a program for making a computer function as display means for displaying a background image in accordance with background image data; reception means for receiving handwritten data indicating the content of notes handwritten on a medium on which the background image is drawn, the medium is placed on a handwritten input device; and reproduction means for displaying the content of the handwritten notes superimposed on the displayed background image so that, in accordance with the handwritten data, the position of the content of the handwritten notes on the background image on the medium and the position of the background image displayed by the display means correspond.

According to a fifth aspect of the invention, there is provided a recording medium on which is stored a program for making a computer function as display means for displaying a background image in accordance with background image data; reception means for receiving handwritten data indicating the content of notes handwritten on a medium on which the background image is drawn, the medium is placed on a handwritten input device; and reproduction means for displaying the content of the handwritten notes superimposed on the displayed background image so that, in accordance with the handwritten data, the position of the content of the handwritten notes on the background image on the medium and the position of the background image displayed by the display means correspond.

According to a sixth aspect of the invention, there is provided a method of display characterized in that it comprises a display step of displaying a background image in accordance with background image data; a receiving step of receiving handwritten data indicating the content of notes handwritten on a medium on which the background image is drawn, the medium is placed on a handwritten input device; and a reproduction step of displaying the content of the handwritten notes superimposed on the displayed background image so that, in accordance with the handwritten data, the position of the content of the handwritten notes on the background image on the medium and the position of the background image displayed by the display means correspond.

It should be noted that, in the present specification, "means" is not restricted in meaning simply to physical means but also includes the case where the function possessed by the means is realized by software. Also, the function possessed by single means can be realized by two or more physical means and the function of two or more means can be realized by single physical means.

### DESCRIPTION OF DRAWINGS

[Figure 1] is a view showing a display system 100 according to an embodiment of the present invention.
[Figure 2] is a functional block diagram showing the layout of a terminal device 120.
[Figure 3] is a view showing the external appearance of a handwriting input device 200.
[Figure 4] is a functional block diagram showing the layout of a handwriting input device 200.
[Figure 5] is a flow chart showing an example of the operation of the display system 100 according to this embodiment.
[Figure 6] is a diagram showing an example of a display screen displayed on display means 128.
[Figure 7] is a view showing the condition in which a medium is placed on the handwriting input device 200.
[Figure 8] is a view showing the condition in which handwritten input is effected to a medium placed on the handwriting input device 200 of the parent station.
[Figure 9] is a view showing a condition in which the content of notes at the parent station are reproduced on the display means 128 of the various stations.
[Figure 10] is a view showing a condition in which handwritten input is effected on to a medium placed on a handwriting input device 200 and child station.
[Figure 11] is a view showing the condition in which the content of notes made at a child station is further reproduced at the display means 128 of the various stations.

### DETAILED DESCRIPTION

Embodiments of the present invention are described below with reference to the drawings. However, the following embodiments are not restrictive of the invention according to the claims and not all of the combination of characteristic features described in the embodiments are necessarily required in the means for solution according to the invention.

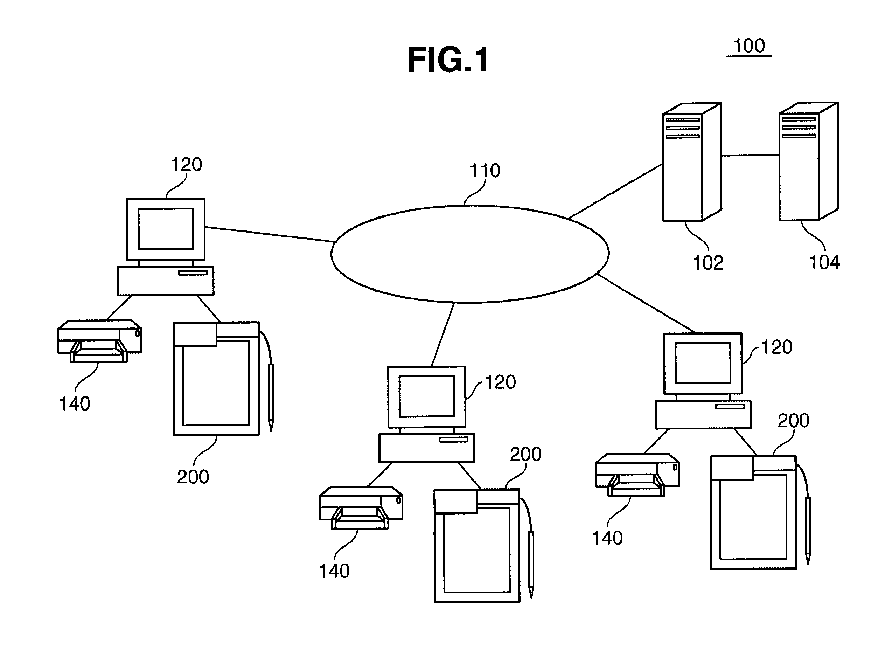

Figure 1 is a view showing a display system 100 according to an embodiment of the present invention. The display system 100 comprises a conference server 102 and a display server 104 arranged so as to be capable of accessing a communication circuit 110 such as for example the Internet, private circuit, or a LAN, and a plurality of terminal devices 120 (for example personal computers) arranged so as to be capable of accessing the communication circuit 110.

A terminal system that is employed by a user is constituted by means of a terminal device 120, handwriting input device 200 and printing device 140, with the handwriting input device 200 and printing device 140 being connected with the terminal device 120.

A conference system is then constructed by each terminal device 120 accessing the conference server 102 and display server 104 and a display system is constructed on this conference system. A conference can then be conducted over the communication circuit 110 by displaying on the terminal devices 120 the content of the notes of data handwritten on the media placed on the handwriting input devices 200.

Specifically, the users participating in the conference on the prescribed terminal devices 120 input for example voice, letters or images and these voices, letters or images for example are output on the other terminal devices 120. In this way, a conference can be conducted on the communication circuit 110 by communication between the users of the terminal devices 120.

Furthermore, with the display system 100 according to this embodiment, a conference can be conducted by displaying the content of handwritten notes input by the users on media placed on the handwriting input devices 200 bearing prescribed background images displayed on the monitors of each of the terminal devices 120, superimposed on these prescribed background images. In this way, even though the conference is conducted over the communication circuit 110, information such as desired letters in desired positions on the media can easily be input by handwriting and this information can then be accurately shared between the users of the terminal devices 120, thereby enabling the conference to proceed smoothly.

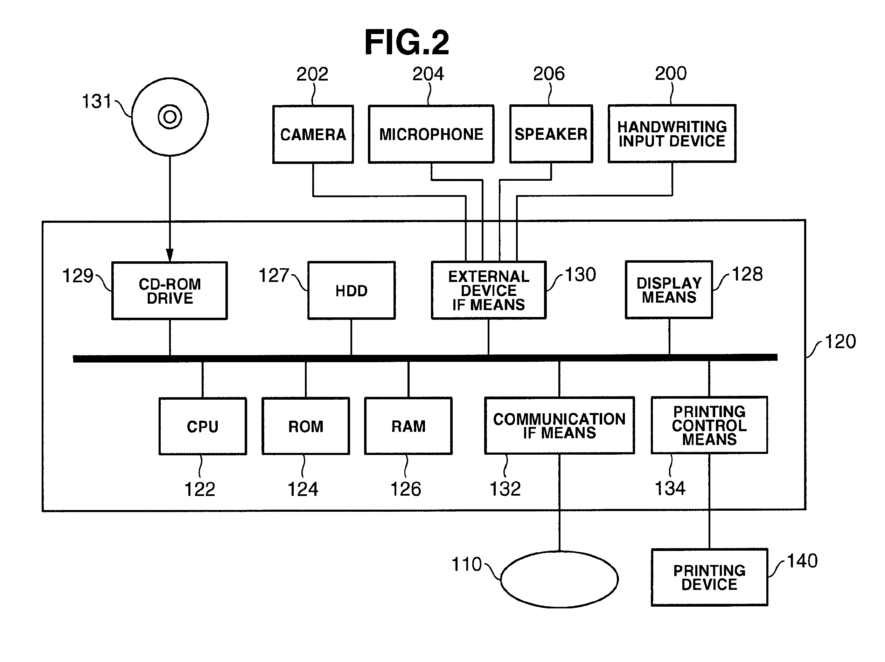

Figure 2 is a functional block diagram showing the layout of a terminal device 120. The terminal device 120 comprises a CPU 122, ROM 124, RAM 126, HDD 127, display means 128, CD-ROM drive 129 that reads a program stored on a CD-ROM 131 constituting an example of a recording medium, external device IF means 130, communication IF means 132 and printing control means 134. The CD-ROM drive 129 is an example of means for reading a program stored on a recording medium; means capable of reading other recording media such as a magnetic disk drive or DVD drive could be employed.

This CPU 122 reads programs such as the operating system, conference system program and display system program stored on the ROM 124, HDD 127 and/or CD-ROM 131 and controls the overall operation of this terminal device 120 in accordance with these programs. The system may be constituted by independent or combined software programs and may be supplied from a recording medium such as CD-ROM 131 or through a communication circuit 110. Also, the CPU 122 may employ the RAM 124 as for example a working area for storing data such as handwritten data received from the handwriting input device 200.

The display means 128 is a display device such as a monitor or projector that displays for example images or letters and is used to display the background image that is used for the conference and/or the content of the notes of handwritten input data on the handwriting input device 200. Also, the display means 128 includes means (such as for example a video board or device drive) for displaying for example images on this device. Also, the display means 128 may be separately provided from the terminal device 120.

The external device IF means 130 performs transfer of data with respect to an external device such as a handwriting input device 200, camera 202, microphone 204 or speaker 206. The external device IF means 130 includes physical means for realizing communication functions such as a chip or connector corresponding to the communication standard such as USB, RS-232C or IEEE 1394 and/or software for realizing communication functions such as device drivers. Also, the external device IF means 130 may be wireless communication means.

The external device IF 130 accepts image data of an image picked up by the camera 202, voice data of voice picked up by a microphone 204 and handwritten data indicating the content of handwritten notes on the medium placed on the handwriting input device 200. Also, the external device IF 130 transfers the voice data accepted by the internal device 120 to the speaker 206 through the communication circuit 110, so that this voice can be reproduced.

The communication IF means 132 performs communication such as sending and receiving through the communication circuit 110 background image data or handwritten data with respect to the conference server 102 and display server 104 and the other terminal devices 120, for example, that are connected with this communication circuit 110. The communication IF means 132 may be wireless communication means.

The printing control means 134 controls the printing device 140 connected with the terminal device 120 so as to print the background image by the printing device 140 on a medium in accordance with the background image data. A medium may be a paper medium such as printing paper of the printing device 140 or a medium such as plastic or glass on which letters or graphics or the like can be drawn by means of the pen 230 of the handwriting input device 200.

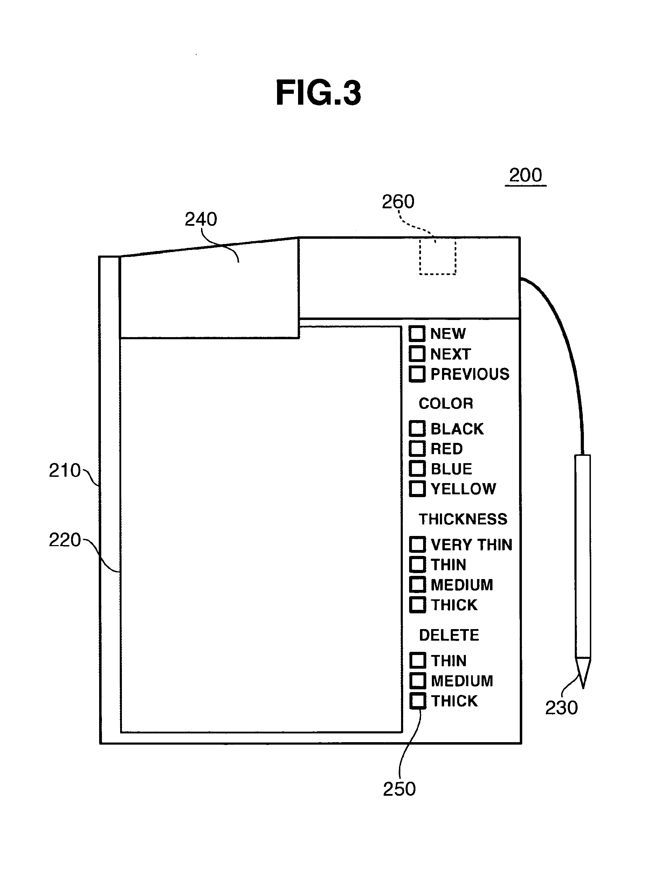

Figure 3 is an external view of the handwriting input device 200. The handwriting input device 200 comprises a frame 210, a sensor board 220 on which has placed a medium on which the background image is drawn, a pen 230 for manually writing for example letters on the medium that is placed on the sensor board 220, a clip 240 for fixing the medium on the sensor board 220, attribute input means 250 that accepts attributes of the handwritten notes in question when the content of handwritten notes is reproduced on the medium by display means 128 (see Figure 2), and communication IF means 260 for sending handwritten data indicating the content of notes handwritten on a medium to a terminal device 120.

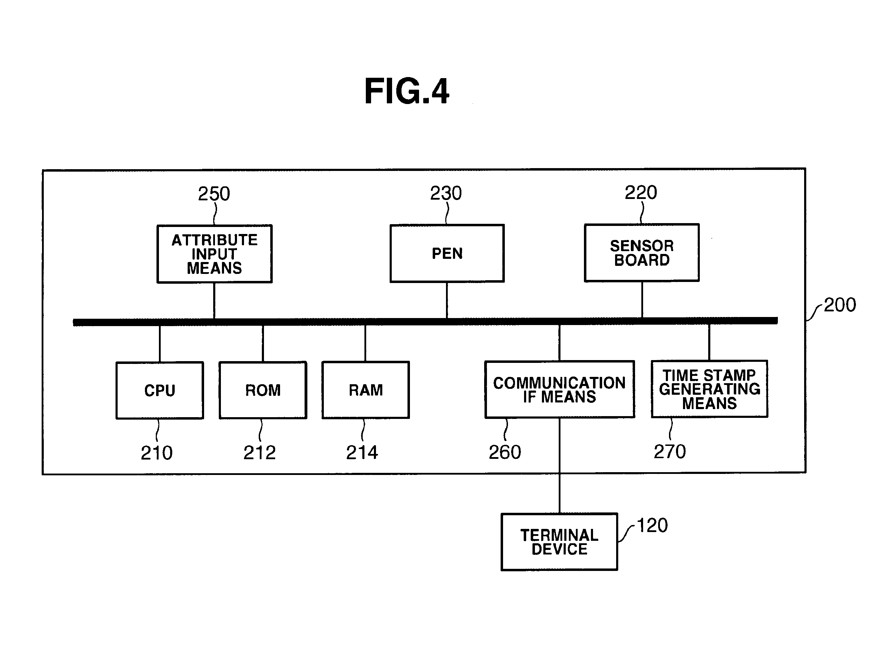

Figure 4 is a functional block diagram showing the layout of the handwriting input device 200. The handwriting input device 200 comprises a CPU 210 that controls the overall operation of this handwriting input device 200, ROM 212 that stores a program for the CPU 210, RAM 214 that is used as a work area for generating handwritten data from the content of handwritten notes on the medium, and time stamp generating means that generates time stamp data indicating the timing with which the pen tip is detected on the sensor board 220.

The sensor board 220 has a function that detects the electrical field intensity of electromagnetic waves emitted from the pen 230. When the pen 230 approaches the sensor board 220, the sensor board 220 detects the position of the pen tip on the sensor board 220 (medium) by detecting the electromagnetic waves emitted from the pen 230. In this case, the sensor board may be constructed so as to detect the position of the pen tip under the condition that for example a handwritten note is being made on the handwritten note medium using the pen 230 (i.e. under the condition that the pen 230 is in contact with the handwritten note medium).

The position of the pen tip on the sensor board 220 is specified as a co-ordinate position on a two-dimensional co-ordinate system whose origin is the reference position of the sensor board 220. The sensor board 220 samples the position of the pen tip with a prescribed timing and stores this position in the RAM 214. The sampling interval is a time interval of an order such that rapid movement of the pen 230 can be detected and is preferably set to a fixed interval of for example 100 or more times/second.

The RAM 214 is used as a work area for the CPU 210. However, it may also be used as a program region, if it is arranged to run a program transferred from for example a terminal device 120. The work area may comprise for example an area that stores the co-ordinate values of the pen tip detected by the sensor board 220, or an area that stores the time at which the co-ordinate values of the pen tip are detected or an area that stores handwritten data generated based on these co-ordinate values and the time.

The attribute input means 250 accepts from the user attributes of the content of handwritten notes made on the medium by the user. The attribute input means 250 of this embodiment is constructed so as to accept attributes of the content of handwritten notes reproduced on the display means 128 by the user touching the attribute input means 250 provided in the frame 210, using the pen 230.

The attributes of the content of the notes comprise for example the thickness or color of the content of these notes when the content of these notes (points or lines handwritten on the medium) that is handwritten on the medium is displayed on the display means 128 of the terminal device 120. Also, the attributes of the content of the handwritten notes include an eraser used to erase the content of the handwritten notes already displayed on the display means 128 by handwriting on the medium using the pen 230, and the thickness of this eraser.

The communication IF means 260 is means for performing communication with a terminal device 120 and sends handwritten note data that has been generated to a terminal device 120. The communication IF means 260 includes physical means for realizing communication functions such as a chip or connector corresponding to a communication standard such as USB, RS-232C or IEEE 1394 and/or software for realizing communication functions such as device drivers. Also, the external device IF means 260 may be wireless communication means.

The time stamp generating means 270 generates time stamp data indicating the timing with which the position of the pen tip is detected on the sensor board 220. For example the time stamp generating means 270 may comprise means for generating a clock signal that changes a logical value with a prescribed period and means for counting the value in accordance with the change of this logical value. The co-ordinate values of the pen tip detected by the sensor board 220 are stored in RAM 214 as time series data in correspondence with the time stamp data indicating the timing with which these co-ordinate values were detected.

The sensor board 220 may sample the position of the pen tip with a prescribed time interval based on the time stamp data generated by the time stamp generating means 270. In this case, the sensor board 220 stores the position of the pen tip in the RAM 214 as time series data by associating the detected co-ordinate values of the pen tip and the time stamp data.

The CPU 210 generates handwritten data by associating the attribute information of the contents of the handwritten notes accepted by the attribute input means 250 with the time series data of the co-ordinate values stored in the RAM 214. Also, if required, the CPU 210 may append machine identifying information (for example the MAC address) that identifies the handwriting input device 200 to the handwritten data.

Also, instead of the time stamp generating means 270 described above, the CPU 210 may append to the handwritten data time stamp data in the form of a character code or binary code generated by periodically referencing the internal clock. Also, the handwritten input device 200 may generate handwritten data by appending time stamp data to the pen tip co-ordinate values and attribute information at the terminal device 120 by sending pen tip co-ordinate values and attribute information to the terminal device 120.

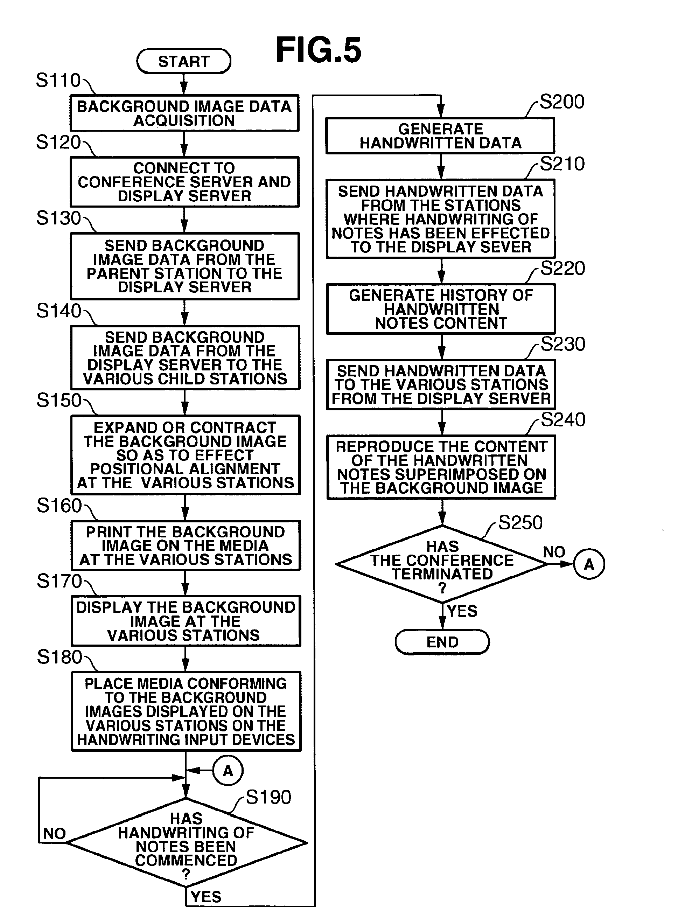

Figure 5 is a flow chart showing an example of the operation of a display system 100 according to this embodiment. Hereinbelow, the operation of the display system 100 when a conference is conducted by users of terminal devices 120 on the communication circuit 110 using the display system 100 according to this embodiment will be described. It should be noted that, although a mode is described in which a plurality of terminal devices 120 are arranged to be capable of accessing the communication circuit 110, hereinbelow the bases where the terminal devices 120 constituting the conference system are provided will be referred to as stations and the station possessing the terminal device 120 that is employed by the user who chairs the conference in question will be referred to as the parent station while the stations possessing the terminal devices 120 that are employed by the other users will be referred to as child stations.

First of all, the background image data displayed by the display means 128 of the terminal devices 120 is acquired (S110) by the parent station. The background image data is acquired as an image file capable of being displayed by the display means 128, and may be for example a JPEG, BMP or GIF file. The background image data may be acquired by using an image input device such as a scanner to scan a background image provided on a paper medium or the like, or may be acquired by converting to image data for example a document created using document creation software or image creation software. Background image data may also be acquired by downloading image data uploaded to an Internet site.

Next, the parent station and the child stations are connected (S120) with the conference server 102 and display server 104. The users of the parent station and the child stations start up the programs that were installed beforehand on these terminal devices 120 and the terminal devices 120 are connected with the conference server 102 and display server 104 by accessing the conference server 102 and display server 104. In this way, a conference system is constituted on the communication circuit 110 and a display system is constituted on this conference system, thereby enabling a conference to be conducted on the communication circuit 110 by the users of the various stations.

Next, the background image data is sent (S130) to the display server 104. The display server 104 then sends (S140) the background image data that was accepted from the parent station to the child stations. In this embodiment, the background image data is sent from the parent station to the child stations through the display server 104; however, it would be possible to send the background image data from the parent station to the child stations using transmission means such as for example electronic mail, separately from the operation of the display system 100.

Next, the terminal devices 120 at the various stations expand or contract (S150) the background image received from the display server 104 in at least one direction such that the co-ordinate values on the background image displayed by the display means 128 of the terminal device 120 in question and the co-ordinate values in the background image printed on the medium by the printing device 140 correspond. In this embodiment, the terminal devices 120 at least expand or contract the received background image such that the background image displayed on the display means 128 and the background image printed on the medium are similar.

The terminal devices 120 for example expand or contract the received background image in accordance with the shape and/or size of the region (sensor board 220) on which the medium is placed on the handwriting input device 200. In this case, the terminal devices 120 receive information in respect of this region from the handwriting input device 200 and for example expand or contract the received background image in accordance with this information. Also, the terminal devices 120 may store this information beforehand on the ROM 124 or RAM 126 or HDD 127. This information may also be part of the program stored on the ROM 124 or RAM 126 or HDD 127.

Also, the terminal devices 120 may expand or contract the received background image in accordance with the region on the medium that is printable by the printing device 140. For example, the terminal devices 120 may expand or contract the background image such that the background image is printed with maximum size in this printable region. In this case, the terminal devices 120 may for example receive information regarding this region from the printing device 140 and may expand or contract the received background image in accordance with this information. Also, the terminal devices 120 may store this information beforehand in the ROM 124 or RAM 126 or HDD 127. For example the terminal devices 120 may also acquire this information from a program such as a printer driver stored in the ROM 124 or RAM 126 or HDD 127.

Next, the terminal devices 120 at the various stations cause the printing device 140 to print the background image on the medium (S160). In this embodiment, the terminal devices 120 at the various stations cause the printing device 140 to print the background image on the medium after this background image has been expanded or contracted in the expansion or contraction step (S150). In this way, the content of the handwritten notes on the medium placed on the sensor board 220 can be accurately reproduced superimposed on the background images displayed by the display means 128. Also, it may be arranged for the terminal devices 120 at the various stations to cause the printing device 140 to print on the medium an image including the content of the notes reproduced superimposed on the background image in a step (S240), to be described, of reproducing the content of the notes superimposed on the background image.

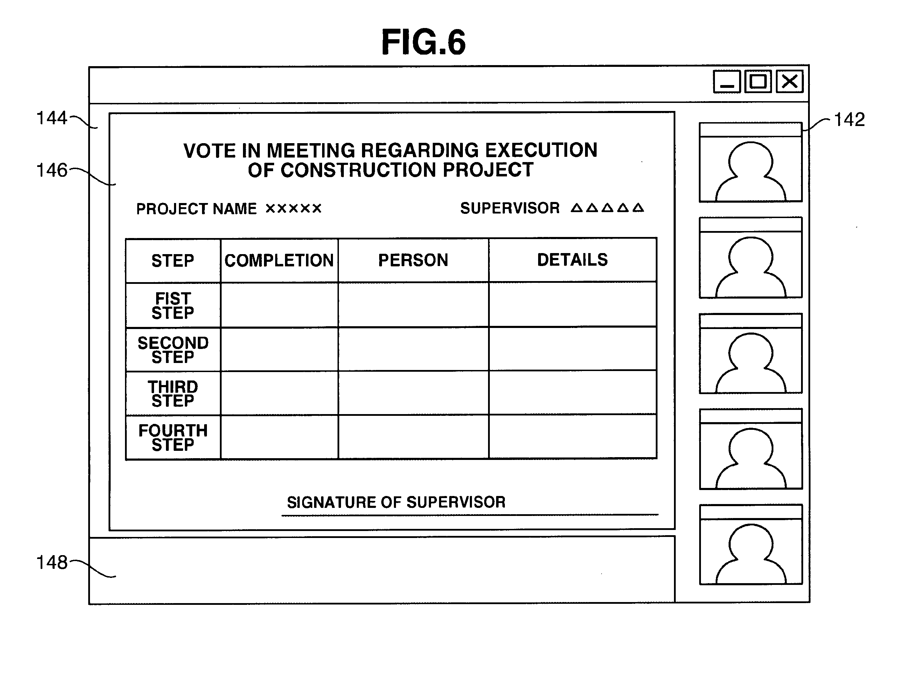

Next, the background image is displayed (S170) on the display means 128 at the terminal devices 120 of the various stations. Figure 6 is a view showing an example of a display image (window) displayed on the display means 128: in this display image, there are provided a region 142 that displays images of the users at the various stations picked up by a camera 202 connected with the terminal device 120, a region 144 (main area) where the background image 146 is displayed, and a region 146 that is used by the users of the various stations to chat using text data.

In the step (S150) of expanding or contracting the background image, the terminal devices 120 at the various stations display the background image that has been expanded or contracted on the display means 128 at the various terminal devices 120. Preferably the terminal devices 120 at the various stations display the background image if there is a request for displaying the background image from the terminal device 120 of the parent station. In this embodiment, when a background image to be displayed at the various stations has been selected by the terminal device 120 of the parent station, the terminal device 120 of the parent station requests this selected background image to be displayed at the various stations through the display server 104.

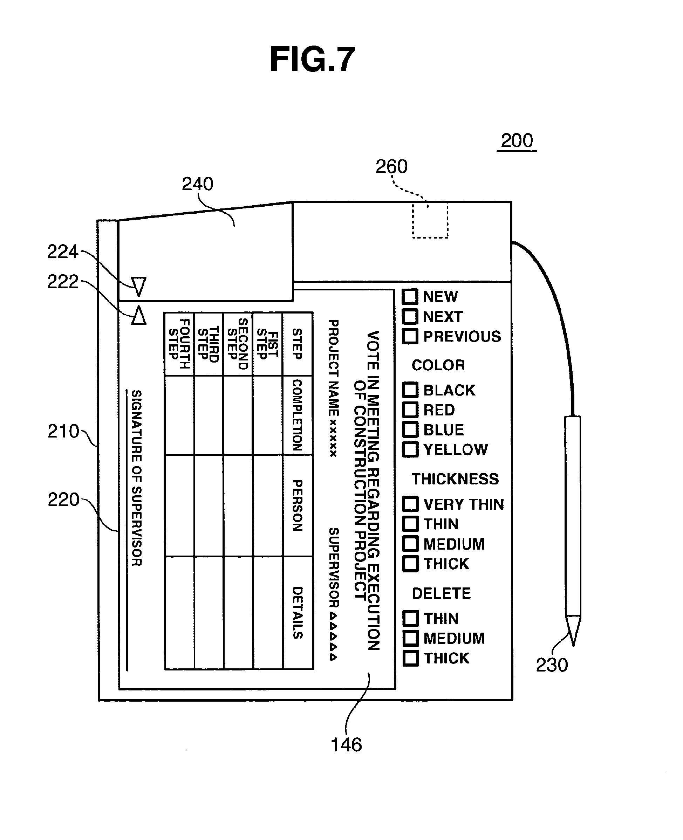

Next, media on which has been printed a background image matching the background image displayed at each of the stations is placed (S180) on the handwriting input devices 200 that are connected with the terminal devices 120. Specifically, as shown in Figure 7, these media are placed on the sensor boards 220 of the handwriting input devices 200 and are fixed by means of a clip 240. In this case, preferably a prescribed position of the medium is placed aligned with a reference position of the sensor board 220. For example, the medium is placed such that one of the four corners of the medium overlies the upper left corner position of the sensor board 220. Also, it is possible, in a step (S240) of reproducing the content of notes superimposed on the background image, to be described, to place on the sensor board 220 a medium on which is printed an image including the content of notes reproduced superimposed on the background image.

Also, the terminal device 120, in the step (S160) of printing the background image on the medium, may print a reference mark 222 on the medium by means of the printing device 140. Also, the medium may be placed on the sensor board 220 such that the reference market 222 matches a reference mark 224 provided on the handwriting input device 200.

In this embodiment, in the step (S240) of reproducing the content of notes superimposed on the background image, to be described, by printing a background image in expanded or contracted fashion on the medium and placing this medium in a prescribed position on the handwriting input device 200, the content of notes handwritten on the medium on which the background image is printed can be accurately reproduced superimposed on the background image displayed on the display means 128.

As described above, after a conference system and display system have been constituted by connecting the terminal devices 120 of each of the stations with the conference server 102 and the display server 104, a condition is produced in which notes can be made on the background image when the background image is displayed on the display means 128 of the stations. After this, first of all, the operation of the display system 100 will be described in the case of an example in which notes are made on the parent station and, next, notes are made on the child stations.

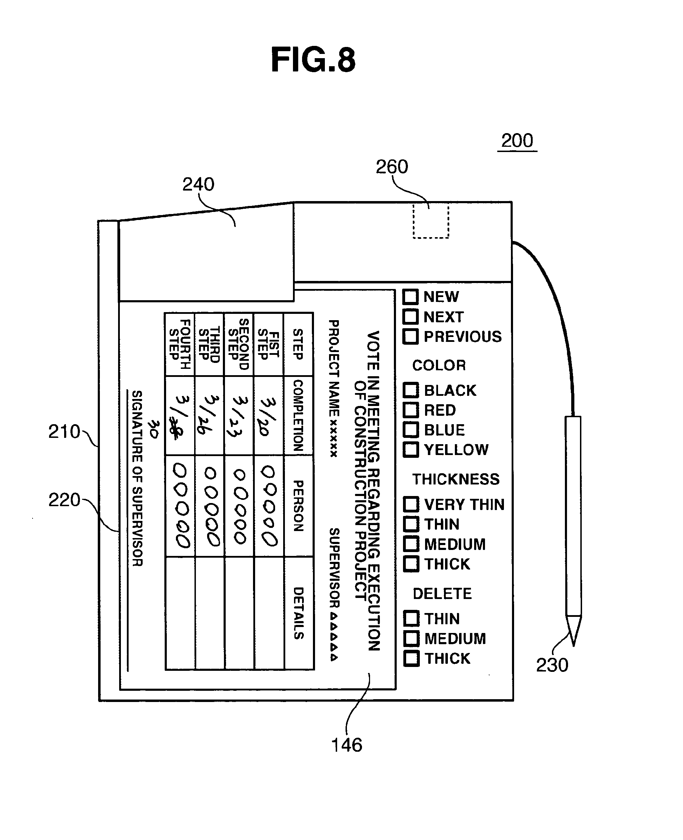

First of all, in the handwriting input device 200 of the parent station, if for example letters are entered as notes on the medium so as to be displayed as shown for example in Figure 8 (in this Figure handwritten notes are made in the "completion time" and "person immediately responsible" columns) (Yes in S190), the handwriting input device 200 at the parent station generates notes data (S200) in respect of the content of these notes and sends this data to the terminal devices 120. Also, the terminal device 120 at the parent station receives notes data generated from the handwriting input device 200 and sends this note data to the display server 104 (S210).

Next, the display server 104 generates (S220) a history of the content of the notes handwritten on the handwriting input devices 200 at each station, based on the notes data received from the parent station. The display server 104 generates the history of the content of notes by converting the notes data to time sequence data using the time stamp data of the timing with which the content of these notes was handwritten, which is included in the notes data received from each station. In this way, the display server 104 can manage the notes data in chronological order and thus, if necessary, can again reproduce the notes data on the display means 128 of each station sequentially in time sequence.

Also, if the display system 100 employs background images of a plurality of types, the display server 104 may generate histories of the notes content for each background image. Specifically, the display server 104 generates a history of the notes content in which the notes data corresponding to the notes content displayed superimposed on the first background image is associated with this first background image and generates a history of the notes content in which the notes data corresponding to the notes content displayed superimposed on the second background image is associated with this second background image. In this case, when the content of the notes is displayed on the display means 128, the terminal devices 120 of each station append background image identification information indicating the background image that is displayed on this display means 128 to the notes data before sending the notes data to the display server 104. In this case, the display server 104 generates a history of the notes content by putting the notes data in chronological order for each background image, using the background image identification information.

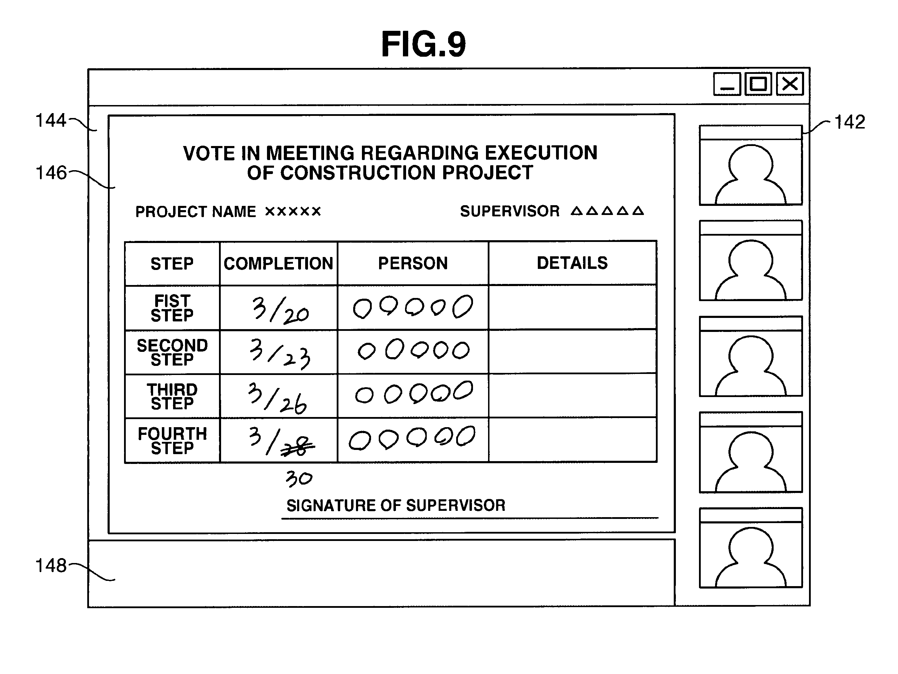

Next, the display server 104 sends (S230) the notes data received from the parent station to each station including the parent station. The terminal device 120 at each station including the parent station then uses this notes data to reproduce the notes content superimposed on the background image 146 as shown in Figure 9. Specifically, the terminal device 120 specifies the position of reproduction of the notes content on the background image displayed on the display means 128 by using the co-ordinate values of the pen tip that are included in the notes data, and uses the attribute information to specify the attributes (thickness and color etc of points or lines etc) of the notes content that is thus displayed. In this case, the terminal devices 120 may specify the attributes of the notes content, reproduced in accordance with the terminal where the notes content is handwritten, separately from the attribute information included in the notes data. For example, the station identification information (for example the IP address or MAC address of the terminal device 120) that identifies the terminal device 120 (station) in question in the terminal device 120 where the handwritten input was effected may be appended to the notes data and the notes content may be reproduced at each station in accordance with the identification information of the station in question. For example, a mode may be envisioned in which the notes content of the parent station is reproduced in red and the notes content of the child stations is reproduced in blue.

Also, when the attribute data included in the notes data indicates erasure of the notes content, the notes content that is already displayed superimposed on the background information is erased in accordance with the co-ordinate values of the pen tip and the attribute information. In this case, it may be arranged to erase all of the notes content displayed superimposed on the background image or to erase only the notes content of a prescribed station.

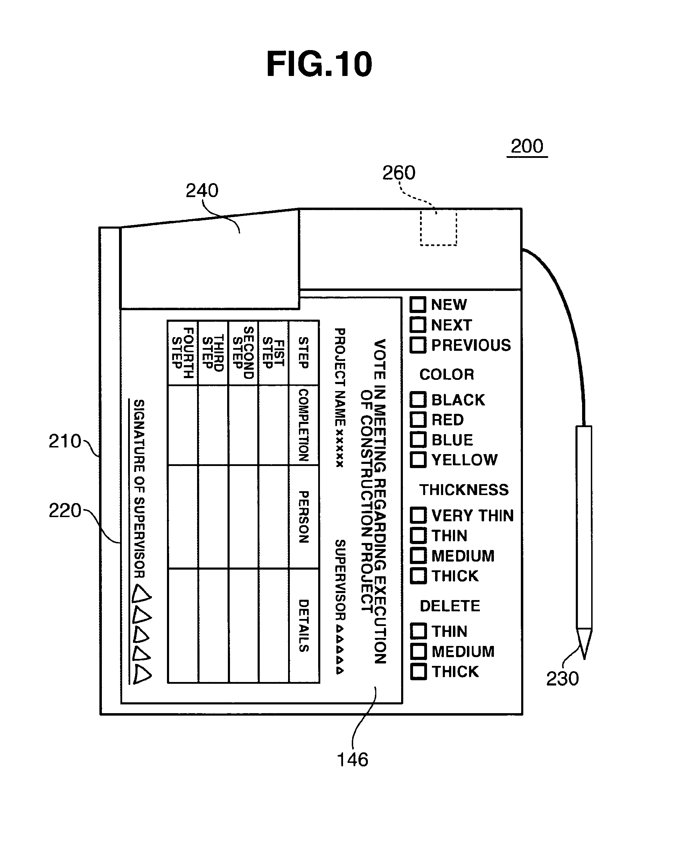

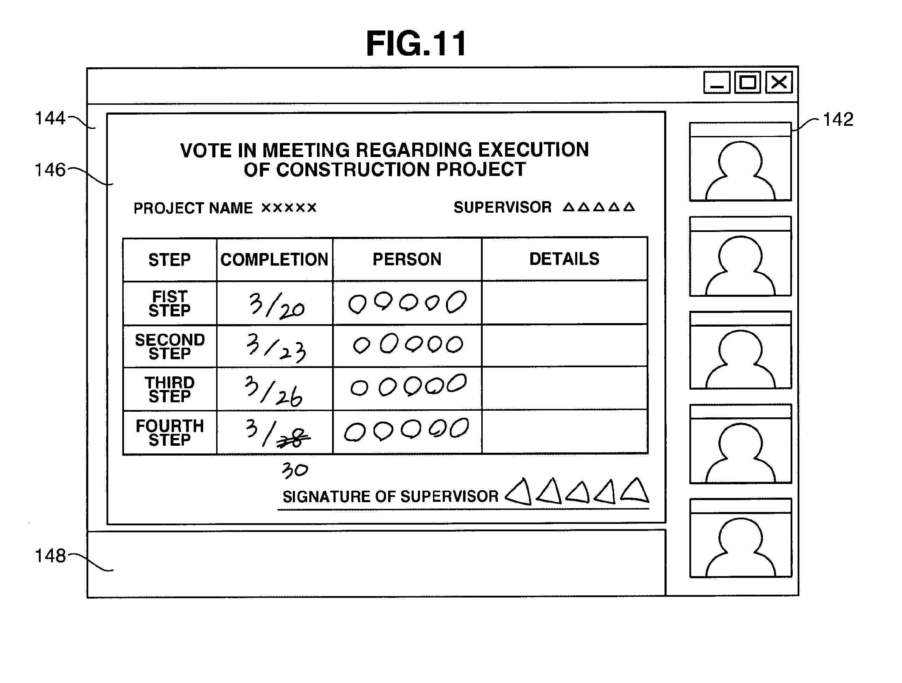

Next, continuing the conference (No in S250), if (Yes in S190) for example as shown in Figure 10 letters or the like are handwritten on the medium (in this Figure the signature of the supervisor is handwritten) at the handwriting input devices 200 of the child stations, notes data is generated (S200) in respect of notes content in the same way as in the case of the parent station. By the same steps as in the case of the parent station (S210 to S230), using the notes data, the terminal devices 120 in each of the stations reproduce (S240) the content of notes handwritten at the child stations superimposed on the content of the notes handwritten at the parent station and on the background image 146 as shown in Figure 11. In this way, the content of other notes from the plurality of stations can be written on top of the content of prescribed notes reproduced on the background image.

In this case, the display system 100 may be provided with a function of restricting the reproduction of the content of notes handwritten on the handwriting input device 200 of a child station on the display means 128 of the various stations solely to cases where this is approved by the parent station. For example, it may be arranged that the content of notes handwritten on the handwriting input device 200 of a child station is reproduced on the display means 128 of the various stations only in the case where authorization to make entries, whereby the content of handwritten notes can be reproduced on the display means 128 of the various stations, is requested by a child station from the parent station and the parent station grants authorization to make entries in respect of this request. For example, an arrangement may be adopted whereby the display server 104 sends notes data received from a child station to the various stations only when the child station in question has authorization to make entries, or whereby the terminal device 120 at a child station sends notes data to the display server 104 only when the child station in question has authorization to make entries.

Although the present invention has been described with reference to embodiments, the practical examples or examples of application described through the above embodiments of the invention may be suitably combined, depending on the application, or may be employed with modifications or improvements: thus the present invention is not restricted to the disclosure of the embodiments described above. It will be clear from the claims that such combinations or modified or improved modes are included in the technical scope of the present invention.

## Claims

1. A terminal device comprising:
display means for displaying a background image in accordance with background image data;
reception means for receiving handwritten data indicating the content of notes handwritten on a medium on which the background image is drawn, the medium being placed on a handwriting input device; and
reproduction means for displaying the content of the handwritten notes superimposed on the displayed background image so that, in accordance with the handwritten data, the position of the content of the handwritten notes on the background image on the medium and the position of the background image displayed by the display means correspond.

2. The terminal device according to claim 1, further comprising reception means for receiving the background image data through a communication circuit.

3. The terminal device according to claim 1, further comprising printing control means for printing the background image on the medium in a printing device in accordance with the background image data.

4. The terminal device according to claim 3, wherein the printing control means causes the printing device to print the background image expanded or contracted in at least one direction, in accordance with the region where the medium is placed in the handwriting input device.

5. The terminal device according to claim 4, further comprising storage means that stores co-ordinate data whereby a correspondence is established between co-ordinates in the printing region in which the background image is printed on the medium and co-ordinates in a display region in which the background image is displayed by the display means, wherein
the reproduction means displays the content of the handwritten notes superimposed on the displayed background image in accordance with the co-ordinate data.

6. The terminal device according to claim 4, wherein the printing control means expands or contracts the background image in at least one direction in accordance with a region, on the medium, that is printable by the printing device.

7. The terminal device according to claim 3, wherein the printing control means further causes the printing device to print a reference mark indicating the direction for placing the medium on the handwriting input device.

8. A display system comprising:
a first terminal device and a second terminal device constituting terminal devices according to any of claims 1 to 7; and
a server connected through a communication circuit with the first terminal device and the second term device, wherein
the first terminal device sends the background image data to the server through the communication circuit,
the server sends the background image data received from the first terminal device to the second terminal device through the communication circuit, and
the second terminal device displays the background image in accordance with the background image data received from the server.

9. The display system according to claim 8, wherein the second terminal device displays the background image when there is a request from the first terminal device to display the background image.

10. The display system according to claim 8, wherein
the first terminal device sends first handwritten data constituting the handwritten data received by the first terminal device to the server,
the server sends the first handwritten data at least to the second terminal device, and
the second terminal device displays the content of the handwritten notes indicated by the first handwritten data.

11. The display system according to claim 10, wherein
the second terminal device sends second handwritten data constituting the handwritten data received by this second terminal device to the server,
the server further sends the second handwritten data at least to the first terminal device, and
the first terminal device further displays the content of the handwritten notes indicated by the second handwritten data.

12. A display system comprising a first terminal device and a second terminal device constituting terminal devices according to any of claims 1 to 7, wherein
the first terminal device generates a synthesized image including the background image and the content of the handwritten notes displayed superimposed on this background image to be sent to the second terminal device, and
the second terminal device displays the synthesized image as the background image in the second terminal device.

13. A program for making a computer function as:
display means for displaying a background image in accordance with background image data;
reception means for receiving handwritten data indicating the content of notes handwritten on a medium on which the background image is drawn, the medium is placed on a handwritten input device; and
reproduction means for displaying the content of the handwritten notes superimposed on the displayed background image so that, in accordance with the handwritten data, the position of the content of the handwritten notes on the background image on the medium and the position of the background image displayed by the display means correspond.

14. A recording medium on which is stored a program for making a computer function as
display means for displaying a background image in accordance with background image data;
reception means for receiving handwritten data indicating the content of notes handwritten on a medium on which the background image is drawn, the medium is placed on a handwritten input device; and
reproduction means for displaying the content of the handwritten notes superimposed on the displayed background image so that, in accordance with the handwritten data, the position of the content of the handwritten notes on the background image on the medium and the position of the background image displayed by the display means correspond.

15. A method of display comprising:
a display step of displaying a background image in accordance with background image data;
a receiving step of receiving handwritten data indicating the content of notes handwritten on a medium on which the background image is drawn, the medium is placed on a handwritten input device; and
a reproduction step of displaying the content of the handwritten notes superimposed on the displayed background image so that, in accordance with the handwritten data, the position of the content of the handwritten notes on the background image on the medium and the position of the background image displayed by the display means correspond.
